# EUROPEAN PATENT APPLICATION

(11) **EP 4 311 296 A1**
(43) Date of publication of application: **24.01.2024**
(21) Application number: 22770407.9
(22) Date of filing: 11.03.2022
(51) Int. Cl.: H04W 28/02, H04W 72/04, H04L 5/16

(54) **TRANSMISSION PROCESSING METHOD AND APPARATUS, AND TERMINAL**

(30) Priority: 16.03.2021 CN 202110280793
(71) Applicant: Vivo Mobile Communication Co., Ltd., Dongguan, Guangdong 523863 (CN)
(72) Inventor: LI, Na, Dongguan, Guangdong 523863 (CN); WU, Kai, Dongguan, Guangdong 523863 (CN); PAN, Xueming, Dongguan, Guangdong 523863 (CN)
(74) Representative: Lavoix
(86) International application number: PCT/CN2022/080414
(87) International publication number: WO 2022/194052

(57) **Abstract**

This application discloses a transmission processing method and apparatus and a terminal. The method includes: performing, by the terminal, a first operation in a case that an interval between an end position of a first resource set and a start position of a second resource set is less than an uplink-downlink switching period. The first operation includes at least one of the following: determining that network scheduling is erroneous; determining that network configuration is erroneous; quitting uplink transmission or downlink operation on the first resource set; performing rate matching on last X1 symbols of the first resource set; puncturing last X1 symbols of the first resource set; quitting downlink operation or quitting transmission on the second resource set; performing rate matching on first Y1 symbols of the second resource set; puncturing first Y2 symbols of the second resource set; and implementing a determined first behavior based on the terminal; where the first resource set is a resource set before an uplink-downlink switching, and the second resource set is a resource set after the uplink-downlink switching.

## Description

### CROSS-REFERENCE TO RELATED APPLICATIONS

This application claims priority to Chinese Patent Application No. 202110280793.7, filed in China on March 16, 2021, which is incorporated herein by reference in its entirety.

### TECHNICAL FIELD

The present invention relates to the field of communication technologies, and in particular, to a transmission processing method and apparatus and a terminal.

### BACKGROUND

In a frequency division duplex (Frequency Division Duplexing, FDD) system, some user equipment (User Equipment, UE) support full duplex-FDD operation, and some UEs support half duplex-FDD operation or do not have the full duplex capability. These UEs will share some cell-specific semi-static configurations. Regarding cell-specific uplink and downlink transmission, full duplex-FDD UEs do not need a period for switching between uplink and downlink transmission, but half duplex-FDD UEs need a period for switching. If a base station is required to guarantee the period for switching between the cell-specific uplink and downlink transmission through configuration and scheduling, network configuration will be greatly limited, hindering full duplex-FDD UEs and half duplex-FDD UEs from coexisting on a same network.

### SUMMARY

Embodiments of this application provide a transmission processing method and apparatus and a terminal, which can solve the problem that different configuration requirements of half duplex-FDD terminals and full duplex-FDD terminals are difficult to satisfy in an FDD system on a network.

According to a first aspect, a transmission processing method is provided, including:
performing, by a terminal, a first operation in a case that an interval between an end position of a first resource set and a start position of a second resource set is less than an uplink-downlink switching period, where the first operation includes at least one of the following:
determining that network scheduling is erroneous;
determining that network configuration is erroneous;
quitting uplink transmission or downlink operation on the first resource set, where the downlink operation includes at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; where
the first resource set is a resource set corresponding to uplink transmission or downlink operation before an uplink-downlink switching, and the second resource set is a resource set corresponding to uplink transmission or downlink operation after the uplink-downlink switching.

According to a second aspect, a transmission processing method is provided, including:
in a case that a first condition is satisfied, determining, by a terminal, that resource for uplink transmission conflicts with resource for downlink operation, where the terminal is a half duplex terminal in a frequency division duplex FDD system, and the downlink operation includes at least one of downlink reception, downlink measurement, and downlink monitoring; where
the first condition includes at least one of the following:
   time domain resource for uplink transmission and time domain resource for downlink operation overlap at least partially;
   an interval between an end position of a first resource set and a start position of a second resource set is less than a first switching period; and
   the interval between the end position of the first resource set and the start position of the second resource set is less than a second switching period; where
   the first resource set is resource used for the uplink transmission and/or the downlink operation before an uplink-downlink switching, and the second resource set is resource used for the uplink transmission and/or the downlink operation after the uplink-downlink switching;
   the first switching period is a switching period for the terminal to switch from downlink operation to uplink transmission; and
   the second switching period is a switching period for the terminal to switch from uplink transmission to downlink operation.

According to a third aspect, a transmission processing method is provided, including:
in a case that a terminal does not have full duplex capability, regarding paired spectrum, or supplementary uplink, or flexible frequency spectrum and frequency band, determining, by the terminal, that resource satisfying a second condition among configured physical random access channel PRACH transmission resource is a valid transmission opportunity for the PRACH; where
the second condition includes:
   in a PRACH slot, the PRACH transmission resource being not prior to SSB transmission resource, and the PRACH transmission resource being later than the last SSB and at least N_gap symbols away from the last SSB.

According to a fourth aspect, a transmission processing method is provided, including:
in a case that a terminal does not have full duplex capability, and PUSCH transmission resource of a message A does not overlap in time domain with a valid PRACH, determining, by the terminal, that resource satisfying a third condition among the PUSCH transmission resource of the message A is a valid transmission opportunity for the PUSCH of the message A; where
the valid PRACH is a valid PRACH associated with a 4-step random access procedure or a valid PRACH associated with a 2-step random access procedure; and
the third condition includes:
   the PUSCH transmission resource of the message A being not prior to SSB transmission resource, and the PUSCH transmission resource of the message A being later than the last SSB and at least N_gap symbols away from the last SSB.

According to a fifth aspect, a transmission processing apparatus is provided, applied to a terminal and including:
a first processing module, configured to perform a first operation in a case that an interval between an end position of a first resource set and a start position of a second resource set is less than uplink-downlink switching period, where the first operation includes at least one of the following:
determining that network scheduling is erroneous;
determining that network configuration is erroneous;
quitting uplink transmission or downlink operation on the first resource set, where the downlink operation includes at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; where
the first resource set is a resource set corresponding to uplink transmission or downlink operation before an uplink-downlink switching, and the second resource set is a resource set corresponding to uplink transmission or downlink operation after the uplink-downlink switching.

According to a sixth aspect, a transmission processing apparatus is provided, applied to a terminal and including:
a first determining module, configured to determine that resource for uplink transmission conflicts with resource for downlink operation in a case that a first condition is satisfied, where the terminal is a half duplex terminal in a frequency division duplex FDD system, and the downlink operation includes at least one of downlink reception, downlink measurement, and downlink monitoring; where
the first condition includes at least one of the following:
   time domain resource for uplink transmission and time domain resource for downlink operation overlap at least partially;
   an interval between an end position of a first resource set and a start position of a second resource set is less than a first switching period; and
   the interval between the end position of the first resource set and the start position of the second resource set is less than a second switching period; where
   the first resource set is resource used for the uplink transmission and/or the downlink operation before an uplink-downlink switching, and the second resource set is resource used for the uplink transmission and/or the downlink operation after the uplink-downlink switching;
   the first switching period is a switching period for the terminal to switch from downlink operation to uplink transmission; and
   the second switching period is a switching period for the terminal to switch from uplink transmission to downlink operation.

According to a seventh aspect, a transmission processing apparatus is provided, applied to a terminal and including:
a second determining module, configured to: in a case that a terminal does not have full duplex capability, regarding paired spectrum, or supplementary uplink, or flexible frequency spectrum and frequency band, determine, by the terminal, that resource satisfying a second condition among configured physical random access channel PRACH transmission resource is a valid transmission opportunity for the PRACH; where
the second condition includes:
   in a PRACH slot, the PRACH transmission resource being not prior to SSB transmission resource, and the PRACH transmission resource being later than the last SSB and at least N_gap symbols away from the last SSB.

According to an eighth aspect, a transmission processing apparatus is provided, applied to a terminal and including:
a third determining module, configured to: in a case that the terminal does not have full duplex capability, and PUSCH transmission resource of a message A does not overlap in time domain with a valid PRACH, determine, by the terminal, that resource satisfying a third condition among the PUSCH transmission resource of the message A is a valid transmission opportunity for the PUSCH of the message A; where
the valid PRACH is a valid PRACH associated with a 4-step random access procedure or a valid PRACH associated with a 2-step random access procedure; and
the third condition includes:
   the PUSCH transmission resource of the message A being not prior to SSB transmission resource, and the PUSCH transmission resource of the message A being later than the last SSB and at least N_gap symbols away from the last SSB.

According to a ninth aspect, a terminal is provided. The terminal includes a processor, a memory, and a program or instructions stored in the memory and capable of running on the processor. When the program or instructions are executed by the processor, the steps of the method according to the first aspect, the second aspect, the third aspect, or the fourth aspect are implemented.

According to a tenth aspect, a readable storage medium is provided. The readable storage medium stores a program or instructions, and when the program or instructions are executed by a processor, the steps of the method according to the first aspect, the second aspect, the third aspect, or the fourth aspect are implemented.

According to an eleventh aspect, a chip is provided. The chip includes a processor and a communication interface, where the communication interface is coupled to the processor, and the processor is configured to run a program or instructions to implement the steps of the method according to the first aspect, the second aspect, the third aspect, or the fourth aspect.

According to a twelfth aspect, a computer program product is provided. The computer program product is stored in a non-transitory storage medium, and the computer program product is executed by at least one processor to implement the steps of the method according to the first aspect, the second aspect, the third aspect, or the fourth aspect.

According to a thirteenth aspect, a communication device is provided, configured to perform the steps of the method according to the first aspect, the second aspect, the third aspect, or the fourth aspect.

According to the embodiments of this application, in a case that an interval between an end position of a first resource set and a start position of a second resource set is less than an uplink-downlink switching period, a decreased capability terminal performs the first operation, for example, determining that network scheduling/configuration is erroneous, performing rate matching on or puncturing last X1 symbols of the first resource set, or quitting reception or quitting transmission on the second resource set. In this way, conflict between uplink transmission and downlink transmission is avoided, and the network is not required to perform special configuration and scheduling on half duplex terminals to guarantee the period for switching between cell-specific uplink and downlink transmission. As a result, network configuration can satisfy the requirements of both half duplex-FDD terminals and full duplex-FDD terminals, removing restrictions on network configuration.

### BRIEF DESCRIPTION OF DRAWINGS

FIG. 1 is a structural diagram of a communication system to which embodiments of this application are applicable;
FIG. 2 is a first schematic flowchart of a transmission processing method according to an embodiment of this application;
FIG. 3 is a first schematic diagram of uplink and downlink transmission in a transmission processing method according to an embodiment of this application;
FIG. 4 is a second schematic diagram of uplink and downlink transmission in a transmission processing method according to an embodiment of this application;
FIG. 5 is a third schematic diagram of uplink and downlink transmission in a transmission processing method according to an embodiment of this application;
FIG. 6 is a fourth schematic diagram of uplink and downlink transmission in a transmission processing method according to an embodiment of this application;
FIG. 7 is a fifth schematic diagram of uplink and downlink transmission in a transmission processing method according to an embodiment of this application;
FIG. 8 is a sixth schematic diagram of uplink and downlink transmission in a transmission processing method according to an embodiment of this application;
FIG. 9 is a seventh schematic diagram of uplink and downlink transmission in a transmission processing method according to an embodiment of this application;
FIG. 10 is a second schematic flowchart of a transmission processing method according to an embodiment of this application;
FIG. 11 is a third schematic flowchart of a transmission processing method according to an embodiment of this application;
FIG. 12 is a fourth schematic flowchart of a transmission processing method according to an embodiment of this application;
FIG. 13 is a first schematic modular diagram of a transmission processing apparatus according to an embodiment of this application;
FIG. 14 is a second schematic modular diagram of a transmission processing apparatus according to an embodiment of this application;
FIG. 15 is a third schematic modular diagram of a transmission processing apparatus according to an embodiment of this application;
FIG. 16 is a fourth schematic modular diagram of a transmission processing apparatus according to an embodiment of this application;
FIG. 17 is a structural block diagram of a communication device according to an embodiment of this application; and
FIG. 18 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. It is clear that the described embodiments are only some but not all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of obj ects, for example, a first object may be one or multiple. In addition, "and/or" in this specification and claims indicates at least one of connected objects, and the symbol "/" generally indicates that the associated objects are in an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the above-mentioned systems and radio technologies, and may also be used in other systems and radio technologies. However, in the following descriptions, a new radio (New Radio, NR) system is described for an illustration purpose, and the NR term is used in most of the following descriptions, although these technologies may also be applied to other applications than an NR system application, for example, the 6th generation (6th Generation, 6G) communication system.

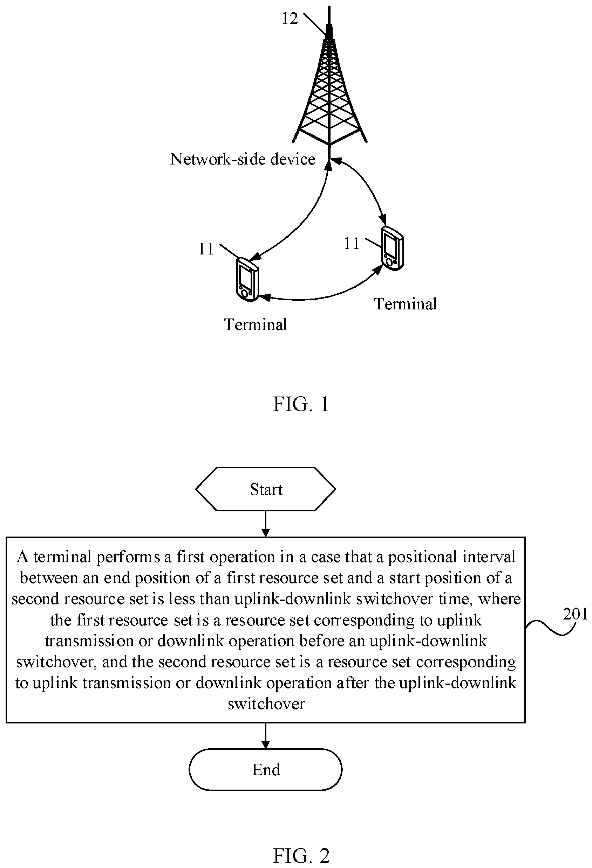

FIG. 1 is a block diagram of a wireless communication system where embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes a wrist band, earphones, glasses, and the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail the transmission processing method provided in the embodiments of this application through specific embodiments and application scenarios thereof with reference to the accompanying drawings.

As shown in FIG. 2, an embodiment of this application provides a transmission processing method, including the following step.

Step 201. Perform, by a terminal, a first operation in a case that an interval between an end position of a first resource set and a start position of a second resource set is less than an uplink-downlink switching period. The terminal is specifically a decreased capability terminal or a reduced capability terminal, and the first operation includes at least one of the following:
determining that network scheduling is erroneous;
determining that network configuration is erroneous;
quitting uplink transmission or downlink operation on the first resource set, where the downlink operation includes at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; where
the first resource set is a resource set corresponding to uplink transmission or downlink operation before an uplink-downlink switching, and the second resource set is a resource set corresponding to uplink transmission or downlink operation after the uplink-downlink switching.

Herein, the first resource set is resource configured and/or scheduled by a network for transmitting uplink data or for receiving, measuring, or monitoring downlink data or signals. The second resource set is resource configured and/or scheduled by a network for transmitting uplink data or for receiving, measuring, or monitoring downlink data or signals. Resource overlap does not exist between the first resource set and the second resource set in time domain.

The start position and end position of the first resource set may be any position within a time unit, the start position and end position of the second resource set may be any position within a time unit, and the time unit is a slot or a sub-slot.

The first resource set may or may not include the resource required for uplink-downlink switching, and the second resource set may or may not include the resource required for uplink-downlink switching.

The decreased/reduced capability terminal (Reduced Capability UE, RedCap UE) may be a terminal that does not have the full duplex capability, that is, a half duplex terminal.

In the transmission processing method according to this embodiment of this application, in a case that an interval between an end position of a first resource set and a start position of a second resource set is less than an uplink-downlink switching period, a decreased capability terminal performs the first operation, for example, determining that network scheduling/configuration is erroneous, performing rate matching on or puncturing last X1 symbols of the first resource set, or quitting reception or quitting transmission on the second resource set. In this way, conflict between uplink transmission and downlink transmission is avoided, and the network is not required to perform special configuration and scheduling on half duplex terminals to guarantee the period for switching between cell-specific uplink and downlink transmission. As a result, network configuration can satisfy the requirements of both half duplex-FDD terminals and full duplex-FDD terminals, removing restrictions on network configuration.

Optionally, in a case that a first switching period T_R2T and a second switching period T_T2R cover uplink timing advance (Timing Advance, TA), the uplink-downlink switching period includes at least one of the first switching period and the second switching period; or
in a case that a first switching period and a second switching period do not cover uplink timing advance, the uplink-downlink switching period includes at least one of first determined time and second determined time, where the first determined time is a sum of the first switching period and the uplink timing advance, and the second determined time is a difference between the second switching period and the uplink timing advance; where
the first switching period is a switching period for the terminal to switch from downlink operation to uplink transmission; and
the second switching period is a switching period for the terminal to switch from uplink transmission to downlink operation.

Assuming that a start symbol of the first resource set is denoted by S1-start and an end symbol is denoted by S1-end, and a start symbol of the second resource set is denoted by S2-start and an end symbol is denoted by S2-end, the first operation is performed in a case that (S2-start) - (S 1-end) < T_R2T and/or (S2-start) - (S1-end) < T_T2R.

Alternatively, the first operation is performed in a case that (S2-start) - (S 1-end) < T_R2T + TA and/or (S2-start) - (S 1-end) < T_T2R - TA.

Optionally, X1 is determined based on at least one of subcarrier spacing for current transmission or reception, the first switching period, and the second switching period; and/or
Y1 is determined based on at least one of subcarrier spacing for current transmission or reception, the first switching period, and the second switching period.

Optionally, the terminal performs the first operation based on at least one of the following. In other words, a specific operation of the first operation to be performed by the terminal is determined based on at least one of the following:
configuration of a network-side device;
capability of the terminal;
type of the terminal;
processing timeline (processing timeline) of the terminal;
configuration mode or scheduling mode for uplink transmission;
information contained in uplink transmission;
configuration mode or scheduling mode for downlink operation; and
information contained in downlink operation; where
the uplink transmission is uplink transmission on the first resource set and/or the second resource set; and
the downlink operation is downlink operation on the first resource set and/or the second resource set.

For example, the scheduling mode includes dynamic scheduling or RRC signaling configuration, or a special signaling indication such as a synchronization signal/physical broadcast channel signal block (Synchronization Signal and PBCH block, SSB) indicated to the terminal through SSB position information (ssb-PositionsInBurst) in a system information block SIB1 or ssb-PositionsInBurst in serving cell common information (ServingCellConfigCommon), or for another example, a control resource set configured by a main information block MIB for a TypeO physical downlink control channel (Physical downlink control channel, PDCCH) common search space. Alternatively, the information contained in the uplink transmission or the downlink operation is valid random access resource, for example, a physical random access channel, and for another example, a tracking reference signal (Tracking RS, TRS) obtained based on an indication in system information, higher layer signaling, and dynamic signaling (for example, a paging early indication (paging early indication, PEI) or a paging PDCCH).

The following describes in detail the transmission processing method of this application with reference to specific embodiments.

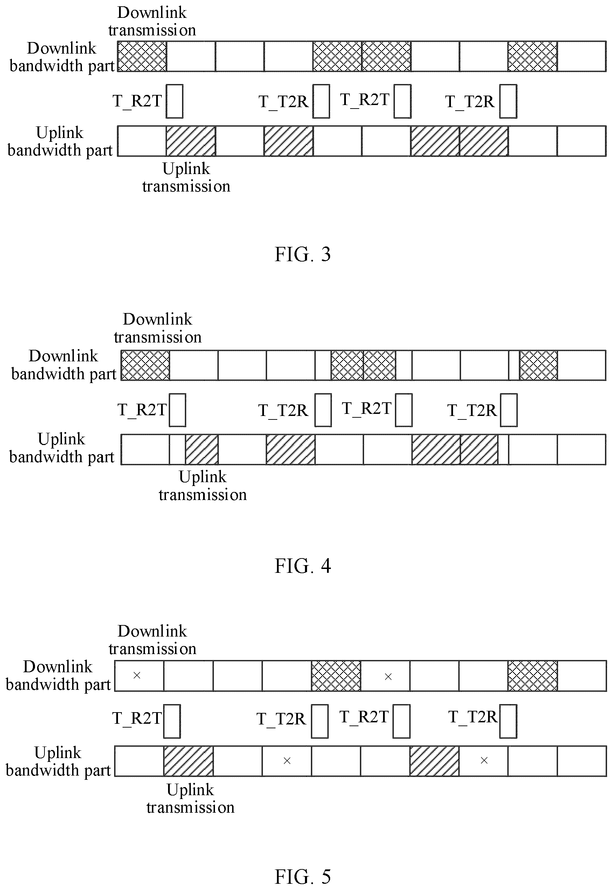

As shown in FIG. 3, an interval between the downlink operation and the uplink transmission is less than the uplink-downlink switching period. Therefore, it is determined that network scheduling and/or configuration is erroneous. In other words, the terminal does not expect the interval between the uplink transmission or downlink operation on the first resource set and the uplink transmission or downlink operation on the second resource set to be less than the uplink-downlink switching period. It can also be described as that the interval between the uplink and downlink transmission configured or scheduled by the network must be greater than the uplink-downlink switching period, as shown in FIG. 4.

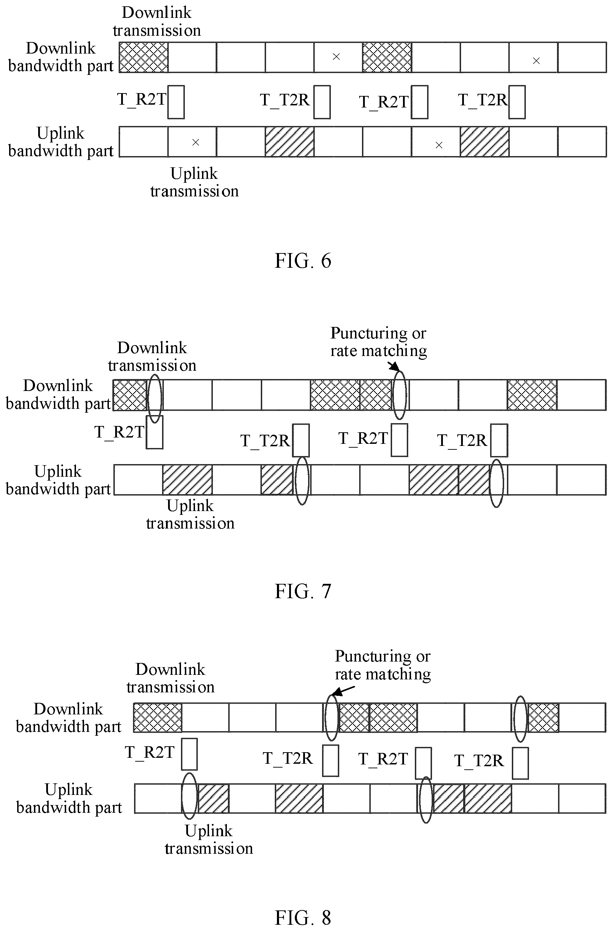

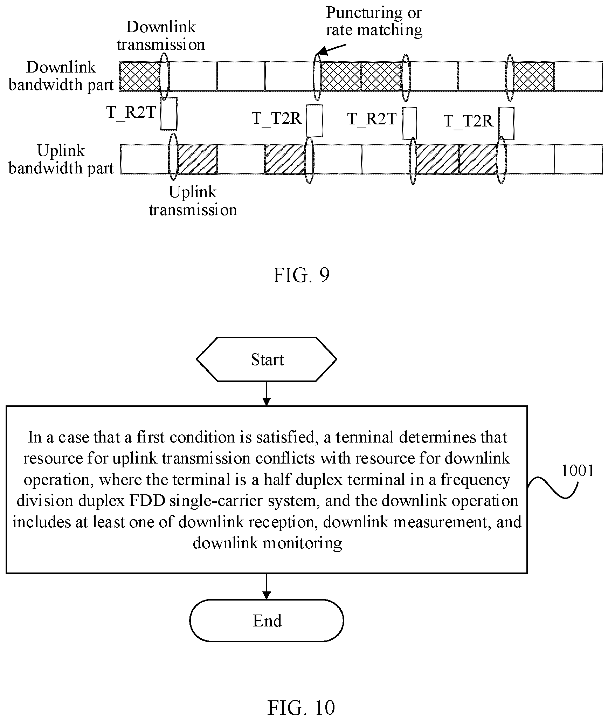

In a case that the interval between the end position of the first resource set and the start position of the second resource set is less than the uplink-downlink switching period, as shown in FIG. 5, uplink transmission or downlink operation is quit on a first resource set S 1. Alternatively, as shown in FIG. 6, uplink transmission or downlink operation is quit on a second resource set S2. Alternatively, as shown in FIG. 7, rate matching (Rate-matching) or puncturing (Puncturing) is performed on last X1 (for example, 1) symbols of the first resource set, or as shown in FIG. 8, rate-matching or puncturing is performed on first Y1 symbols of the second resource set, or as shown in FIG. 9, rate-matching or puncturing is performed on the last X1 symbols of the first resource set and the first Y1 symbols of the second resource set, so that X1 + Y1 ≥ uplink-downlink switching period.

In the transmission processing method according to the embodiments of this application, in a case that an interval between an end position of a first resource set and a start position of a second resource set is less than an uplink-downlink switching period, a decreased capability terminal performs the first operation, for example, determining that network scheduling/configuration is erroneous, performing rate matching on or puncturing last X1 symbols of the first resource set, or quitting reception or quitting transmission on the second resource set. In this way, conflict between uplink transmission and downlink transmission is avoided, and the network is not required to perform special configuration and scheduling on half duplex terminals to guarantee the period for switching between cell-specific uplink and downlink transmission. As a result, network configuration can satisfy the requirements of both half duplex-FDD terminals and full duplex-FDD terminals, removing restrictions on network configuration.

As shown in FIG. 10, an embodiment of this application further provides a transmission processing method, including the following step.

Step 1001. In a case that a first condition is satisfied, determine, by a terminal, that resource for uplink transmission conflicts with resource for downlink operation, where the terminal is a half duplex terminal in a frequency division duplex FDD system, and the downlink operation includes at least one of downlink reception, downlink measurement, and downlink monitoring; where
the first condition includes at least one of the following:
time domain resource for uplink transmission and time domain resource for downlink operation overlap at least partially;
an interval between an end position of a first resource set and a start position of a second resource set is less than a first switching period; and
the interval between the end position of the first resource set and the start position of the second resource set is less than a second switching period; where
the first resource set is resource used for the uplink transmission and/or the downlink operation before an uplink-downlink switching, and the second resource set is resource used for the uplink transmission and/or the downlink operation after the uplink-downlink switching;
the first switching period is a switching period for the terminal to switch from downlink operation to uplink transmission; and
the second switching period is a switching period for the terminal to switch from uplink transmission to downlink operation.

In this embodiment of this application, the half duplex terminal in a frequency division duplex FDD system determines, based on the first condition, that the resource for uplink transmission conflicts with the resource for downlink operation, facilitating subsequent conflict processing.

Optionally, after the determining, by the terminal, that resource for uplink transmission conflicts with resource for downlink operation, the method further includes:
performing a second behavior in a case that no first DCI is configured for the terminal; or
performing a third behavior in a case that first DCI is configured for the terminal and the first DCI is properly detected; or
performing a fourth behavior in a case that first DCI is configured for the terminal and the first DCI is not detected; where
the second behavior is determined based on at least one of the following:
   configuration mode or scheduling mode for uplink transmission;
   configuration mode or scheduling mode for downlink operation; where
   the uplink transmission is uplink transmission on the first resource set and/or the second resource set; and
   the downlink operation is downlink operation on the first resource set and/or the second resource set;
   information contained in uplink transmission; and
   information contained in downlink operation;
   the third behavior includes: performing, on a first FDD frequency band, conflict processing on overlapped resource between downlink operation configured or scheduled by a network and a dynamic flexible symbol indicated by the first DCI, where the first FDD frequency band includes an FDD downlink frequency band and an FDD uplink frequency band, the overlapped resource is overlapped resource between the time domain resource for uplink transmission and the time domain resource for downlink operation, and the conflict processing herein is the same as a processing behavior in a time division duplex system when a terminal detects the first DCI; and
   the fourth behavior includes: performing processing on the first FDD frequency band based on a fifth behavior, where the fifth behavior is a behavior of the terminal in a case that the first DCI is not detected in a time division duplex system.

In this embodiment of this application, the first DCI is specifically DCI format 2_0.

Optionally, after the performing, on a first FDD frequency band, conflict processing on overlapped resource between downlink operation configured or scheduled by a network and a dynamic flexible symbol indicated by the first DCI, the method further includes:
performing, by the terminal, the second behavior.

Optionally, after the performing processing on the first FDD frequency band based on a fifth behavior, the method further includes:
performing, by the terminal, the second behavior.

Optionally, in a case that uplink transmission or downlink operation on the first resource set is configured by RRC or uplink transmission or downlink operation on the second resource set is configured by RRC, the second behavior includes one of the following:
quitting uplink transmission or downlink operation on the second resource set;
quitting uplink transmission;
quitting receiving or transmitting last X2 symbols of the first resource set;
quitting receiving or transmitting first Y2 symbols of the second resource set; and
quitting downlink operation.

Optionally, in a case that uplink transmission on the first resource set is dynamically scheduled or configured by RRC, or uplink transmission on the second resource set is dynamically scheduled or configured by RRC, the second behavior includes:
quitting uplink transmission in a case that downlink operation on the first resource set or the second resource set includes at least one of the following:
a synchronization signal/physical broadcast channel signal block SSB indicated to the terminal through a system information block SIB 1;
a control resource set configured by a main information block MIB for a TypeO PDCCH common search space; and
a valid tracking reference signal obtained based on at least one of system information, higher layer signaling, and dynamic signaling.

Optionally, in a case that uplink transmission or downlink operation on the first resource set is dynamically scheduled, or uplink transmission or downlink operation on the second resource set is dynamically scheduled, the second behavior includes:
determining that network scheduling or network configuration is erroneous.

Optionally, in a case that the downlink operation is dynamically scheduled, the uplink transmission is configured by RRC, and the downlink operation and the uplink transmission correspond to different resource sets, the second behavior includes:
in a case that an interval between a start symbol corresponding to the uplink transmission and a last symbol for scheduling signaling of the downlink operation is greater than or equal to a processing timeline of the terminal, quitting, by the terminal, the uplink transmission or performing rate matching on first Y3 symbols of the resource set corresponding to the uplink transmission; or
in a case that an interval between a start symbol corresponding to the uplink transmission and a last symbol for scheduling signaling of the downlink operation is less than a processing timeline of the terminal, quitting, by the terminal, the downlink operation or puncturing first Y3 symbols of the resource set corresponding to the uplink transmission; or
determining that network scheduling or network configuration is erroneous; and
performing rate matching on last X3 symbols of the downlink operation.

Optionally, the uplink transmission is transmission other than physical random access channel (Physical Random Access Channel, PRACH) transmission.

Optionally, in a case that the uplink transmission is dynamically scheduled and the downlink operation is configured by RRC, and the downlink operation and the uplink transmission correspond to different resource sets, the second behavior includes:
quitting the downlink operation; or
not performing the downlink operation on first Y4 symbols of the resource set corresponding to the downlink operation; or
performing rate matching on last X4 symbols of the resource set corresponding to the uplink transmission; or
determining that the dynamic scheduling is erroneous network scheduling.

Optionally, a signal transmitted by the downlink operation is a signal other than at least one of the following:
an SSB indicated to the terminal through a SIB1;
a control resource set configured by a MIB for a TypeO PDCCH common search space; and
a TRS obtained based on an indication in system information, higher layer signaling, and dynamic signaling (for example, a PEI or a paging PDCCH).

In a specific embodiment of this application, for a terminal not supporting full duplex in an FDD system, in a case that the resource for uplink transmission conflicts with the resource for downlink operation:
(1) if the terminal is not configured to monitor downlink control information format 2_0, namely DCI format 2_0, processing operation is performed as described in the following embodiment 1;
(2) if the terminal is configured to monitor DCI format 2_0 and DCI format 2_0 is properly detected, then
   a) on an FDD DL frequency band, processing is performed as for a conflict in overlapped time domain resource between downlink transmission configured/scheduled by a network and dynamic flexible transmission indicated by DCI format 2_0;
   b) on an FDD UL frequency band, processing is performed as for a conflict in overlapped time domain resource between uplink transmission configured/scheduled by a network and dynamic flexible transmission indicated by DCI format 2_0; and
   c) processing operation is performed as described in embodiment 1 after a) and b) are completed; and
(3) if the terminal is configured to monitor DCI format 2_0 but DCI format 2_0 is not detected at the monitored position of DCI format 2_0, the terminal performs processing, according to protocol 38.213, on both the FDD DL frequency band and the FDD UL frequency band regarding the behavior of DCI format 2_0 not being detected in a TDD system, and then performs processing operation as described in embodiment 1.

### Embodiment 1:

Scenario 1: In a case that downlink or uplink operation is configured by RRC on S1 (the first resource set) and uplink or downlink operation is configured by RRC on S2 (the second resource set), the terminal performs:
method 1: quitting uplink transmission or downlink operation on S2;
method 2: always quitting uplink transmission;
method 3: always quitting receiving or transmitting last X2 symbols of S1;
method 4: always quitting receiving/transmitting first Y2 symbols of S2; or
method 5: always quitting downlink operation.

Scenario 2: In a case that uplink transmission is dynamically scheduled or configured by RRC on S1 or S2, only if downlink transmission on S2 or S1 contains at least one of the following information, uplink transmission is always quit:
an SSB indicated to the terminal through ssb-PositionsInBurst in SIB1 or ssb-PositionsInBurst in ServingCellConfigCommon; and
a control resource set configured through pdcch-ConfigSIB 1 in a MIB for TypeO-PDCCH CSS.

Optionally, a valid tracking reference signal (Tracking RS, TRS) obtained based on an indication in system information, higher layer signaling, and/or dynamic signaling (for example, a paging early indication (paging early indication, PEI) or a paging PDCCH).

Scenario 3: In a case that downlink operation or uplink transmission is dynamically scheduled on S1 and uplink or downlink operation is dynamically scheduled on S2, a length of an uplink-downlink switching period must be guaranteed when the network adopts dynamic scheduling. In other words, in a case that an interval between an end position of a first resource set and a start position of a second resource set is less than uplink-downlink switching period, the terminal determines that network scheduling or configuration is erroneous.

Scenario 4: In a case that downlink operation is dynamically scheduled on S 1 (or S2) and uplink transmission is configured by RRC on S2 (or S1), one of the following methods is performed.

### Method 1:

If (start symbol j uplink transmitted on S2 (or S1) - last symbol i where downlink dynamic signaling received by the terminal resides) ≥ processing timeline T_process of the terminal, the terminal quits transmission on S2 (or S 1) or performs rate matching (Rate-matching) on first Y symbols on S2 (or S1).

If (start symbol j uplink transmitted on S2 (or S1) - last symbol i where downlink dynamic signaling received by the terminal resides) < processing timeline T_process of the terminal, the terminal quits reception on S2 (or S1) or performs puncturing (Puncturing) on first Y symbols on S2 (or S1), or the network always guarantees that (start symbol j uplink transmitted on S2 (or S1) - last symbol i where downlink dynamic signaling received by the terminal resides) ≥ processing timeline T_process of the terminal.

### Method 2:

During dynamic scheduling, the network must guarantee the length of a period for uplink-downlink switching. Otherwise, the terminal determines that network scheduling or network configuration is erroneous.

### Method 3: The terminal performs rate-matching on last X symbols on S1.

For scenario 4, uplink transmission configured by RRC optionally does not contain PRACH.

Scenario 5: In a case that uplink transmission is dynamically scheduled on S1 (or S2) and downlink transmission is configured by RRC on S2 (or S1), then:
the terminal quits reception on S2 (or S1), or the terminal does not receive downlink transmission for first Y symbols of S2 (or last X symbols of S1), or the terminal performs rate-matching on last X symbols of S1 (or first Y symbols of S2), or the network must guarantee the length of a period for uplink-downlink switching during dynamic scheduling.

For scenario 5, downlink transmission configured by RRC does not contain the following signals:
an SSB indicated to the terminal through ssb-PositionsInBurst in SIB1 or ssb-PositionsInBurst in ServingCellConfigCommon; and
a control resource set configured through pdcch-ConfigSIB 1 in a MIB for TypeO-PDCCH CSS.

Optionally, the method according to the embodiment of this application further includes:
determining valid resource based on indication information, where the indication information includes at least one of system information, RRC signaling, and L1 signaling; or
determining that all uplink resource and all downlink resource are valid resource; where
the valid resource is resource used by the terminal for uplink, downlink, and/or flexible transmission.

In this embodiment of this application, the network can explicitly indicate the resource (a slot and/or a symbol) to be used in uplink, downlink, and/or a flexible transmission direction of a half duplex-FDD (HD-FDD) terminal through system information, RRC signaling, and/or L1 signaling. In a case that the system information, RRC signaling, and/or L1 signaling does not provide a valid resource indication, the UE may assume that all uplink resource and all downlink resource are valid resource.

In this embodiment of this application, the half duplex terminal in a frequency division duplex FDD system determines, based on the first condition, that the resource for uplink transmission conflicts with the resource for downlink operation, facilitating subsequent conflict processing.

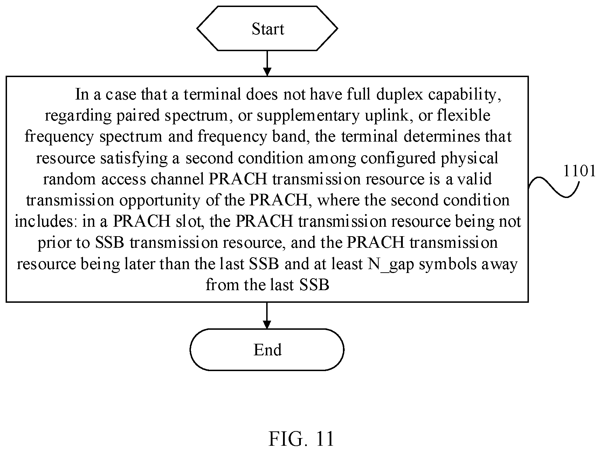

As shown in FIG. 11, an embodiment of this application further provides a transmission processing method, including the following step.

Step 1101. In a case that a terminal does not have full duplex capability, regarding paired spectrum, or supplementary uplink, or flexible frequency spectrum and frequency band, determine, by the terminal, that resource satisfying a second condition among configured physical random access channel PRACH transmission resource is a valid transmission opportunity for the PRACH; where
the second condition includes:
in a PRACH slot, the PRACH transmission resource being not prior to SSB transmission resource, and the PRACH transmission resource being later than the last SSB and at least N_gap symbols away from the last SSB.

N_gap is provided by Table 8.1-2 of protocol 38.213. The SSB is indicated by ssb-PositionsInBurst in SIB1 or ssb-PositionsInBurst in ServingCellConfigCommon.

In this embodiment of this application, in a case that a terminal does not have full duplex capability, regarding paired spectrum, or supplementary uplink, or flexible frequency spectrum and frequency band, the terminal determines that resource satisfying a second condition among configured physical random access channel PRACH transmission resource is a valid transmission opportunity for the PRACH, so as to achieve the objective of determining (verifying) the valid transmission opportunity for the PRACH.

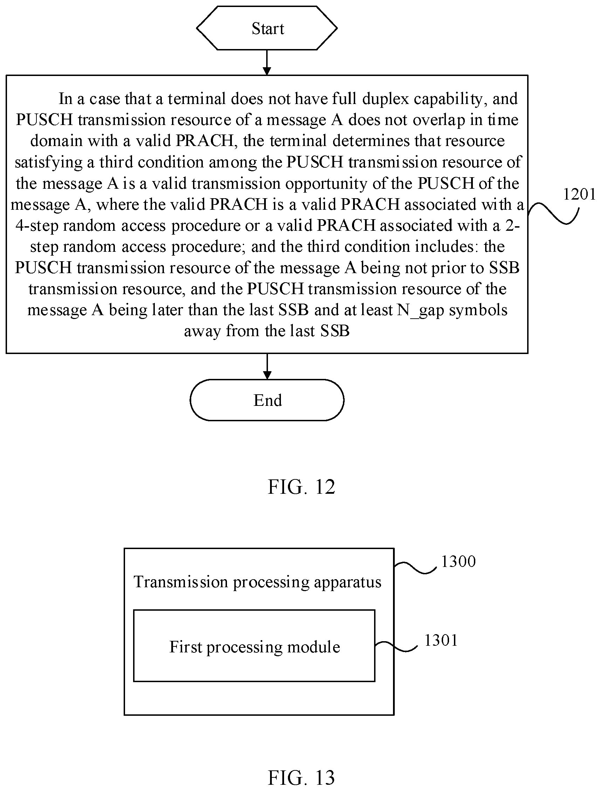

As shown in FIG. 12, an embodiment of this application further provides a transmission processing method, including the following step.

Step 1201. In a case that a terminal does not have full duplex capability, and physical uplink shared channel (Physical Uplink Shared Channel, PUSCH) transmission resource of a message A does not overlap in time domain with a valid PRACH, determine, by the terminal, that resource satisfying a third condition among the PUSCH transmission resource of the message A is a valid transmission opportunity for the PUSCH of the message A, where
the valid PRACH is a valid PRACH associated with a 4-step random access procedure or a valid PRACH associated with a 2-step random access procedure; and
the third condition includes:
   the PUSCH transmission resource of the message A being not prior to SSB transmission resource, and the PUSCH transmission resource of the message A being later than the last SSB and at least N_gap symbols away from the last SSB.

N_gap is provided by Table 8.1-2 of protocol 38.213. The SSB is indicated by ssb-PositionsInBurst in SIB1 or ssb-PositionsInBurst in ServingCellConfigCommon.

In this embodiment of this application, in a case that a terminal does not have full duplex capability, and PUSCH transmission resource of a message A does not overlap in time domain with a valid PRACH, determining, by the terminal, that resource satisfying a third condition among the PUSCH transmission resource of the message A is a valid transmission opportunity for the PUSCH of the message A, so as to achieve the objective of determining (verifying) the valid transmission opportunity for the PUSCH of the message A.

It should be noted that the transmission processing method in this embodiment of this application may be performed by the transmission processing apparatus or a control module for performing the transmission processing method in the transmission processing apparatus. In this embodiment of this application, the transmission processing apparatus according to this embodiment of this application is described by using an example in which the transmission processing apparatus performs the transmission processing method.

As shown in FIG. 13, an embodiment of this application further provides a transmission processing apparatus 1300, applied to a terminal and including:
a first processing module 1301, configured to perform a first operation in a case that an interval between an end position of a first resource set and a start position of a second resource set is less than an uplink-downlink switching period, where the first operation includes at least one of the following:
determining that network scheduling is erroneous;
determining that network configuration is erroneous;
quitting uplink transmission or downlink operation on the first resource set, where the downlink operation includes at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; where
the first resource set is a resource set corresponding to uplink transmission or downlink operation before an uplink-downlink switching, and the second resource set is a resource set corresponding to uplink transmission or downlink operation after the uplink-downlink switching.

Optionally, this embodiment of this application further includes a fourth determining module, configured to determine the interval between the end position of the first resource set and the start position of the second resource set.

Optionally, the first processing module is configured to perform the first operation based on at least one of the following:
configuration of a network-side device;
capability of the terminal;
type of the terminal;
processing timeline of the terminal;
configuration mode or scheduling mode for uplink transmission;
information contained in uplink transmission;
configuration mode or scheduling mode for downlink operation; and
information contained in downlink operation, where
the uplink transmission is uplink transmission on the first resource set and/or the second resource set; and
the downlink operation is downlink operation on the first resource set and/or the second resource set.

Optionally, in a case that a first switching period and a second switching period cover uplink timing advance, the uplink-downlink switching period includes at least one of the first switching period and the second switching period; or
in a case that a first switching period and a second switching period do not cover uplink timing advance, the uplink-downlink switching period includes at least one of first determined time and second determined time, where the first determined time is a sum of the first switching period and the uplink timing advance, and the second determined time is a difference between the second switching period and the uplink timing advance; where
the first switching period is a switching period for the terminal to switch from downlink operation to uplink transmission; and
the second switching period is a switching period for the terminal to switch from uplink transmission to downlink operation.

Optionally, X1 is determined based on at least one of subcarrier spacing for current transmission or reception, the first switching period, and the second switching period; and/or
Y1 is determined based on at least one of subcarrier spacing for current transmission or reception, the first switching period, and the second switching period.

The transmission processing apparatus provided in this embodiment of this application can implement each process implemented by the method embodiment illustrated in FIG. 2 to FIG. 9, with the same technical effects. To avoid repetition, details are not described herein again.

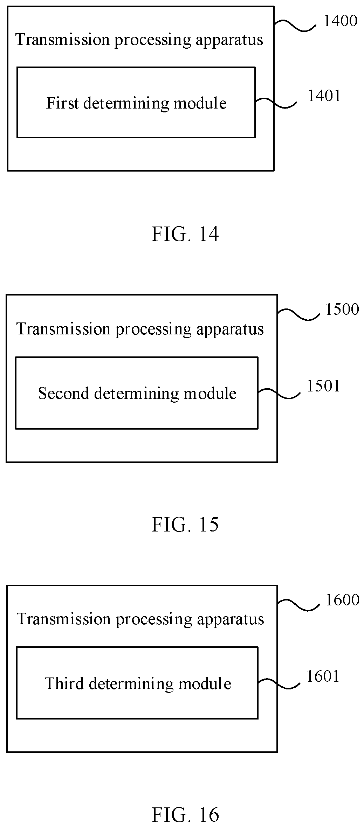

As shown in FIG. 14, an embodiment of this application further provides a transmission processing apparatus 1400, applied to a terminal and including:
a first determining module 1401, configured to determine that resource for uplink transmission conflicts with resource for downlink operation in a case that a first condition is satisfied, where the terminal is a half duplex terminal in a frequency division duplex FDD system, and the downlink operation includes at least one of downlink reception, downlink measurement, and downlink monitoring; where
the first condition includes at least one of the following:
   time domain resource for uplink transmission and time domain resource for downlink operation overlap at least partially;
   an interval between an end position of a first resource set and a start position of a second resource set is less than a first switching period; and
   the interval between the end position of the first resource set and the start position of the second resource set is less than a second switching period; where
   the first resource set is resource used for the uplink transmission and/or the downlink operation before an uplink-downlink switching, and the second resource set is resource used for the uplink transmission and/or the downlink operation after the uplink-downlink switching;
   the first switching period is a switching period for the terminal to switch from downlink operation to uplink transmission; and
   the second switching period is a switching period for the terminal to switch from uplink transmission to downlink operation.

Optionally, the apparatus according to this embodiment of this application further includes:
a fifth determining module, configured to determine the first condition.

Optionally, the apparatus according to this embodiment of this application further includes:
a second processing module, configured to perform a second behavior in a case that no first DCI is configured for the terminal after the first determining module determines that the resource for uplink transmission conflicts with the resource for downlink operation; or
perform a third behavior in a case that first DCI is configured for the terminal and the first DCI is properly detected; or
perform a fourth behavior in a case that first DCI is configured for the terminal and the first DCI is not detected; where
the second behavior is determined based on at least one of the following:
   configuration mode or scheduling mode for uplink transmission;
   configuration mode or scheduling mode for downlink operation; where
   the uplink transmission is uplink transmission on the first resource set and/or the second resource set; and
   the downlink operation is downlink operation on the first resource set and/or the second resource set;
   information contained in uplink transmission; and
   information contained in downlink operation;
   the third behavior includes: performing, on a first FDD frequency band, conflict processing on overlapped resource between downlink operation configured or scheduled by a network and a dynamic flexible symbol indicated by the first DCI, where the first FDD frequency band includes an FDD downlink frequency band and an FDD uplink frequency band, and the overlapped resource is overlapped resource between the time domain resource for uplink transmission and the time domain resource for downlink operation; and
   the fourth behavior includes: performing processing on the first FDD frequency band based on a fifth behavior, where the fifth behavior is a behavior of the terminal in a case that the first DCI is not detected in a time division duplex system.

Optionally, after the performing, on a first FDD frequency band, conflict processing on overlapped resource between downlink operation configured or scheduled by a network and a dynamic flexible symbol indicated by the first DCI, the second processing module is further configured to perform the second behavior.

Optionally, after the performing processing on the first FDD frequency band based on a fifth behavior, the second processing module is further configured to perform the second behavior.

Optionally, in a case that uplink transmission or downlink operation on the first resource set is configured by RRC or uplink transmission or downlink operation on the second resource set is configured by RRC, the second behavior includes one of the following:
quitting uplink transmission or downlink operation on the second resource set;
quitting uplink transmission;
quitting receiving or transmitting last X2 symbols of the first resource set;
quitting receiving or transmitting first Y2 symbols of the second resource set; and
quitting downlink operation.

Optionally, in a case that uplink transmission on the first resource set is dynamically scheduled or configured by RRC, or uplink transmission on the second resource set is dynamically scheduled or configured by RRC, the second behavior includes:
quitting uplink transmission in a case that downlink operation on the first resource set or the second resource set includes at least one of the following:
a synchronization signal/physical broadcast channel signal block SSB indicated to the terminal through a system information block SIB 1;
a control resource set configured by a main information block MIB for a TypeO PDCCH common search space; and
a valid tracking reference signal obtained based on at least one of system information, higher layer signaling, and dynamic signaling.

Optionally, in a case that uplink transmission or downlink operation on the first resource set is dynamically scheduled, or uplink transmission or downlink operation on the second resource set is dynamically scheduled, the second behavior includes:
determining that network scheduling or network configuration is erroneous.

Optionally, in a case that the downlink operation is dynamically scheduled, the uplink transmission is configured by RRC, and the downlink operation and the uplink transmission correspond to different resource sets, the second behavior includes:
in a case that an interval between a start symbol corresponding to the uplink transmission and a last symbol for scheduling signaling of the downlink operation is greater than or equal to a processing timeline of the terminal, quitting, by the terminal, the uplink transmission or performing rate matching on first Y3 symbols of the resource set corresponding to the uplink transmission; or
in a case that an interval between a start symbol corresponding to the uplink transmission and a last symbol for scheduling signaling of the downlink operation is less than a processing timeline of the terminal, quitting, by the terminal, the downlink operation or puncturing first Y3 symbols of the resource set corresponding to the uplink transmission; or
determining that network scheduling or network configuration is erroneous; and
performing rate matching on last X3 symbols of the downlink operation.

Optionally, the uplink transmission is transmission other than physical random access channel PRACH transmission.

Optionally, in a case that the uplink transmission is dynamically scheduled and the downlink operation is configured by RRC, and the downlink operation and the uplink transmission correspond to different resource sets, the second behavior includes:
quitting the downlink operation; or
not performing the downlink operation on first Y4 symbols of the resource set corresponding to the downlink operation; or
performing rate matching on last X4 symbols of the resource set corresponding to the uplink transmission; or
determining that the dynamic scheduling is erroneous network scheduling.

Optionally, a signal transmitted by the downlink operation is a signal other than at least one of the following:
an SSB indicated to the terminal through a SIB1;
a control resource set configured by a MIB for a TypeO PDCCH common search space.

Optionally, the apparatus according to this embodiment of this application further includes:
an indication module, configured to determine valid resource based on indication information, where the indication information includes at least one of system information, RRC signaling, and L1 signaling; or
determining that all uplink resource and all downlink resource are valid resource; where
the valid resource is resource used by the terminal for uplink, downlink, and/or flexible transmission.

The transmission processing apparatus provided in this embodiment of this application can implement each process implemented by the method embodiment illustrated in FIG. 10, with the same technical effects. To avoid repetition, details are not described herein again.

As shown in FIG. 15, an embodiment of this application further provides a transmission processing apparatus 1500, applied to a terminal and including:
a second determining module 1501, configured to: in a case that a terminal does not have full duplex capability, regarding paired spectrum, or supplementary uplink, or flexible frequency spectrum and frequency band, determine, by the terminal, that resource satisfying a second condition among configured physical random access channel PRACH transmission resource is a valid transmission opportunity for the PRACH; where
the second condition includes:
   in a PRACH slot, the PRACH transmission resource being not prior to SSB transmission resource, and the PRACH transmission resource being later than the last SSB and at least N_gap symbols away from the last SSB.

Optionally, the apparatus according to this embodiment of this application further includes:
a sixth determining module, configured to determine configured physical random access channel PRACH transmission resource.

The transmission processing apparatus provided in this embodiment of this application can implement each process implemented by the method embodiment illustrated in FIG. 11, with the same technical effects. To avoid repetition, details are not described herein again.

As shown in FIG. 16, an embodiment of this application further provides a transmission processing apparatus 1600, applied to a terminal and including:
a third determining module 1601, configured to: in a case that the terminal does not have full duplex capability, and PUSCH transmission resource of a message A does not overlap in time domain with a valid PRACH, determine, by the terminal, that resource satisfying a third condition among the PUSCH transmission resource of the message A is a valid transmission opportunity for the PUSCH of the message A; where
the valid PRACH is a valid PRACH associated with a 4-step random access procedure or a valid PRACH associated with a 2-step random access procedure; and
the third condition includes:
   the PUSCH transmission resource of the message A being not prior to SSB transmission resource, and the PUSCH transmission resource of the message A being later than the last SSB and at least N_gap symbols away from the last SSB.

Optionally, the apparatus according to this embodiment of this application further includes:
a seventh determining module, configured to determine the PUSCH transmission resource of the message A.

The transmission processing apparatus provided in this embodiment of this application can implement each process implemented by the method embodiment illustrated in FIG. 12, with the same technical effects. To avoid repetition, details are not described herein again.

The transmission processing apparatus in the embodiments of this application may be an apparatus, or may be a component, an integrated circuit, or a chip of a terminal. The apparatus may be a mobile terminal or a non-mobile terminal. For example, the mobile terminal may include but is not limited to a type of the foregoing terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The transmission processing apparatus in the embodiments of this application may be an apparatus with an operating system. The operating system may be an Android (Android) operating system, an iOS operating system, or another possible operating system. This is not specifically limited in the embodiments of this application.

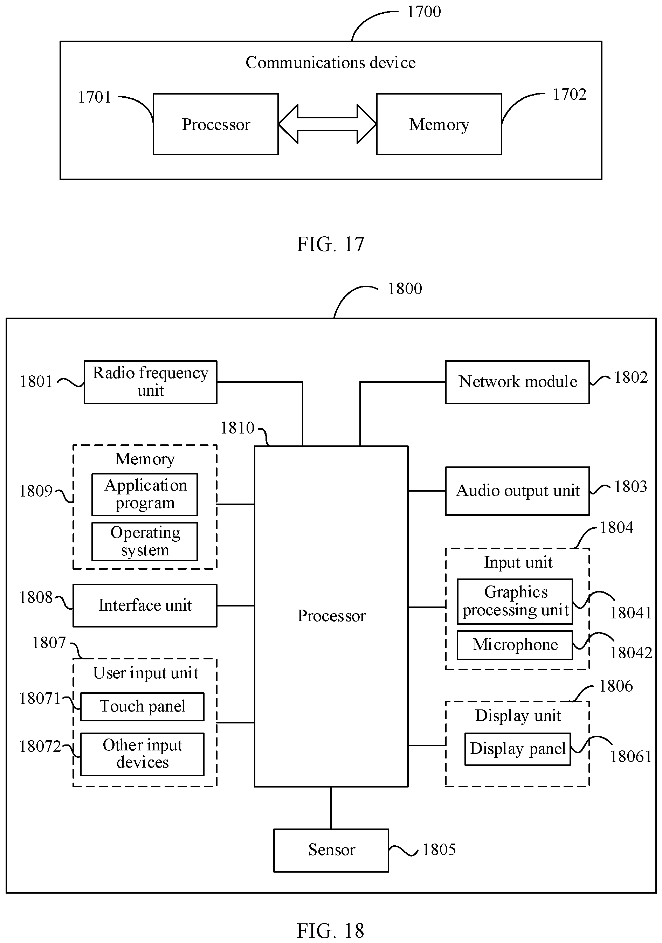

Optionally, as shown in FIG. 17, an embodiment of this application further provides a communication device 1700, including a processor 1701, a memory 1702, and a program or instructions stored in the memory 1702 and capable of running on the processor 1701. For example, in a case that the communication device 1700 is a terminal, when the program or instructions are executed by the processor 1701, each process of the embodiments of the transmission processing method applied to the terminal is implemented, with the same technical effects. To avoid repetition, details are not described herein again.

FIG. 18 is a schematic diagram of a hardware structure of a terminal for implementing the embodiments of this application. The terminal 1800 includes but is not limited to components such as a radio frequency unit 1801, a network module 1802, an audio output unit 1803, an input unit 1804, a sensor 1805, a display unit 1806, a user input unit 1807, an interface unit 1808, a memory 1809, and a processor 1810.

A person skilled in the art can understand that the terminal 1800 may further include a power source (such as a battery) for supplying power to the components. The power source may be logically connected to the processor 1810 through a power management system. In this way, functions such as charge management, discharge management, and power consumption management are implemented by using the power management system. The structure of the terminal shown in FIG. 18 does not constitute a limitation on the terminal. The terminal may include more or fewer components than those illustrated in the figure, or a combination of some components, or components disposed differently. Details are not described herein again.

It should be understood that in the embodiments of this application, the input unit 1804 may include a graphics processing unit (Graphics Processing Unit, GPU) 18041 and a microphone 18042. The graphics processing unit 18041 processes image data of a static picture or a video that is obtained by an image capture apparatus (for example, a camera) in a video capture mode or an image capture mode. The display unit 1806 may include a display panel 18061. The display panel 18061 may be configured in a form of a liquid crystal display, an organic light-emitting diode, or the like. The user input unit 1807 includes a touch panel 18071 and other input devices 18072. The touch panel 18071 is also referred to as a touch screen. The touch panel 18071 may include two parts: a touch detection apparatus and a touch controller. The other input devices 18072 may include but are not limited to a physical keyboard, a functional button (such as a volume control button or a power on/off button), a trackball, a mouse, and a joystick. Details are not described herein.

In the embodiments of this application, the radio frequency circuit 1801 receives downlink data from the network-side device for processing by the processor 1810, and sends uplink data to the network-side device. Generally, the radio frequency unit 1801 includes but is not limited to an antenna, at least one amplifier, a transceiver, a coupler, a low noise amplifier, a duplexer, and the like.

The memory 1809 may be configured to store software programs or instructions, and various data. The memory 1809 may mainly include a program or instruction storage area and a data storage area. The program or instruction storage area may store an operating system, an application program or instructions required by at least one function (for example, an audio playing function and an image playing function), and the like. In addition, the memory 1809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another volatile solid-state storage device.

The processor 1810 may include one or more processing units. Optionally, the processor 1810 may integrate an application processor and a modem processor. The application processor mainly processes an operating system, a user interface, an application program or instructions, and the like. The modem processor mainly processes wireless communication, for example, a baseband processor. It should be understood that alternatively, the modem processor may not be integrated into the processor 1810.

In an optional embodiment, the processor 1810 is configured to perform a first operation in a case that an interval between an end position of a first resource set and a start position of a second resource set is less than an uplink-downlink switching period, where the first operation includes at least one of the following:
determining that network scheduling is erroneous;
determining that network configuration is erroneous;
quitting uplink transmission or downlink operation on the first resource set, where the downlink operation includes at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; where
the first resource set is a resource set corresponding to uplink transmission or downlink operation before an uplink-downlink switching, and the second resource set is a resource set corresponding to uplink transmission or downlink operation after the uplink-downlink switching.

Optionally, in this embodiment, the processor 1810 is configured to perform the first operation based on at least one of the following:
configuration of a network-side device;
capability of the terminal;
type of the terminal;
processing timeline of the terminal;
configuration mode or scheduling mode for uplink transmission;
information contained in uplink transmission;
configuration mode or scheduling mode for downlink operation; and
information contained in downlink operation; where
the uplink transmission is uplink transmission on the first resource set and/or the second resource set; and
the downlink operation is downlink operation on the first resource set and/or the second resource set.

Optionally, in a case that a first switching period and a second switching period cover uplink timing advance, the uplink-downlink switching period includes at least one of the first switching period and the second switching period; or
in a case that a first switching period and a second switching period do not cover uplink timing advance, the uplink-downlink switching period includes at least one of first determined time and second determined time, where the first determined time is a sum of the first switching period and the uplink timing advance, and the second determined time is a difference between the second switching period and the uplink timing advance; where
the first switching period is a switching period for the terminal to switch from downlink operation to uplink transmission; and
the second switching period is a switching period for the terminal to switch from uplink transmission to downlink operation.

Optionally, X1 is determined based on at least one of subcarrier spacing for current transmission or reception, the first switching period, and the second switching period; and/or
Y1 is determined based on at least one of subcarrier spacing for current transmission or reception, the first switching period, and the second switching period.

In another embodiment, the processor 1810 is configured to: in a case that a first condition is satisfied, determine that resource for uplink transmission conflicts with resource for downlink operation, where the terminal is a half duplex terminal in a frequency division duplex FDD system, and the downlink operation includes at least one of downlink reception, downlink measurement, and downlink monitoring; where
the first condition includes at least one of the following:
time domain resource for uplink transmission and time domain resource for downlink operation overlap at least partially;
an interval between an end position of a first resource set and a start position of a second resource set is less than a first switching period; and
the interval between the end position of the first resource set and the start position of the second resource set is less than a second switching period; where
the first resource set is resource used for the uplink transmission and/or the downlink operation before an uplink-downlink switching, and the second resource set is resource used for the uplink transmission and/or the downlink operation after the uplink-downlink switching;
the first switching period is a switching period for the terminal to switch from downlink operation to uplink transmission; and
the second switching period is a switching period for the terminal to switch from uplink transmission to downlink operation.

Optionally, after the determining that resource for uplink transmission conflicts with resource for downlink operation, the processor 1810 is further configured to:
perform a second behavior in a case that no first DCI is configured for the terminal; or
perform a third behavior in a case that first DCI is configured for the terminal and the first DCI is properly detected; or
perform a fourth behavior in a case that first DCI is configured for the terminal and the first DCI is not detected; where
the second behavior is determined based on at least one of the following:
   configuration mode or scheduling mode for uplink transmission;
   configuration mode or scheduling mode for downlink operation; where
   the uplink transmission is uplink transmission on the first resource set and/or the second resource set; and
   the downlink operation is downlink operation on the first resource set and/or the second resource set;
   information contained in uplink transmission; and
   information contained in downlink operation;
   the third behavior includes: performing, on a first FDD frequency band, conflict processing on overlapped resource between downlink operation configured or scheduled by a network and a dynamic flexible symbol indicated by the first DCI, where the first FDD frequency band includes an FDD downlink frequency band and an FDD uplink frequency band, and the overlapped resource is overlapped resource between the time domain resource for uplink transmission and the time domain resource for downlink operation; and
   the fourth behavior includes: performing processing on the first FDD frequency band based on a fifth behavior, where the fifth behavior is a behavior of the terminal in a case that the first DCI is not detected in a time division duplex system.

Optionally, after the performing, on a first FDD frequency band, conflict processing on overlapped resource between downlink operation configured or scheduled by a network and a dynamic flexible symbol indicated by the first DCI, the processor 1810 is further configured to:
perform the second behavior.

Optionally, after the performing processing on the first FDD frequency band based on a fifth behavior, the processor 1810 is further configured to:
perform the second behavior.

Optionally, in a case that uplink transmission or downlink operation on the first resource set is configured by RRC or uplink transmission or downlink operation on the second resource set is configured by RRC, the second behavior includes one of the following:
quitting uplink transmission or downlink operation on the second resource set;
quitting uplink transmission;
quitting receiving or transmitting last X2 symbols of the first resource set;
quitting receiving or transmitting first Y2 symbols of the second resource set; and
quitting downlink operation.

Optionally, in a case that uplink transmission on the first resource set is dynamically scheduled or configured by RRC, or uplink transmission on the second resource set is dynamically scheduled or configured by RRC, the second behavior includes:
quitting uplink transmission in a case that downlink operation on the first resource set or the second resource set includes at least one of the following:
a synchronization signal/physical broadcast channel signal block SSB indicated to the terminal through a system information block SIB 1;
a control resource set configured by a main information block MIB for a TypeO PDCCH common search space; and
a valid tracking reference signal obtained based on at least one of system information, higher layer signaling, and dynamic signaling.

Optionally, in a case that uplink transmission or downlink operation on the first resource set is dynamically scheduled, or uplink transmission or downlink operation on the second resource set is dynamically scheduled, the second behavior includes:
determining that network scheduling or network configuration is erroneous.

Optionally, in a case that the downlink operation is dynamically scheduled, the uplink transmission is configured by RRC, and the downlink operation and the uplink transmission correspond to different resource sets, the second behavior includes:
in a case that an interval between a start symbol corresponding to the uplink transmission and a last symbol for scheduling signaling of the downlink operation is greater than or equal to a processing timeline of the terminal, quitting, by the terminal, the uplink transmission or performing rate matching on first Y3 symbols of the resource set corresponding to the uplink transmission; or
in a case that an interval between a start symbol corresponding to the uplink transmission and a last symbol for scheduling signaling of the downlink operation is less than a processing timeline of the terminal, quitting, by the terminal, the downlink operation or puncturing first Y3 symbols of the resource set corresponding to the uplink transmission; or
determining that network scheduling or network configuration is erroneous; and
performing rate matching on last X3 symbols of the downlink operation.

Optionally, the uplink transmission is transmission other than physical random access channel PRACH transmission.

Optionally, in a case that the uplink transmission is dynamically scheduled and the downlink operation is configured by RRC, and the downlink operation and the uplink transmission correspond to different resource sets, the second behavior includes:
quitting the downlink operation; or
not performing the downlink operation on first Y4 symbols of the resource set corresponding to the downlink operation; or
performing rate matching on last X4 symbols of the resource set corresponding to the uplink transmission; or
determining that the dynamic scheduling is erroneous network scheduling.

Optionally, a signal transmitted by the downlink operation is a signal other than at least one of the following:
an SSB indicated to the terminal through a SIB1;
a control resource set configured by a MIB for a TypeO PDCCH common search space.

Optionally, the processor 1810 is further configured to determine valid resource based on indication information, where the indication information includes at least one of system information, RRC signaling, and L1 signaling; or
determine that all uplink resource and all downlink resource are valid resource; where
the valid resource is resource used by the terminal for uplink, downlink, and/or flexible transmission.

In another embodiment, the processor 1810 is configured to: in a case that a terminal does not have full duplex capability, regarding paired spectrum, or supplementary uplink, or flexible frequency spectrum and frequency band, determine that resource satisfying a second condition among configured physical random access channel PRACH transmission resource is a valid transmission opportunity for the PRACH; where
the second condition includes:
in a PRACH slot, the PRACH transmission resource being not prior to SSB transmission resource, and the PRACH transmission resource being later than the last SSB and at least N_gap symbols away from the last SSB.

In still another embodiment, the processor 1810 is configured to: in a case that a terminal does not have full duplex capability, and PUSCH transmission resource of a message A does not overlap in time domain with a valid PRACH, determining that resource satisfying a third condition among the PUSCH transmission resource of the message A is a valid transmission opportunity for the PUSCH of the message A; where
the valid PRACH is a valid PRACH associated with a 4-step random access procedure or a valid PRACH associated with a 2-step random access procedure; and
the third condition includes:
the PUSCH transmission resource of the message A being not prior to SSB transmission resource, and the PUSCH transmission resource of the message A being later than the last SSB and at least N_gap symbols away from the last SSB.

In this embodiment of this application, in a case that an interval between an end position of a first resource set and a start position of a second resource set is less than an uplink-downlink switching period, a decreased capability terminal performs the first operation, for example, determining that network scheduling/configuration is erroneous, performing rate matching on or puncturing last X1 symbols of the first resource set, or quitting reception or quitting transmission on the second resource set. In this way, conflict between uplink transmission and downlink transmission is avoided, and the network is not required to perform special configuration and scheduling on half duplex terminals to guarantee the period for switching between cell-specific uplink and downlink transmission. As a result, network configuration can satisfy the requirements of both half duplex-FDD terminals and full duplex-FDD terminals, removing restrictions on network configuration.

An embodiment of this application further provides a readable storage medium, where the readable storage medium may be volatile or non-volatile. The readable storage medium stores a program or instructions, and when the program or instructions are executed by a processor, each process of the transmission processing method embodiments is implemented, with the same technical effects. To avoid repetition, details are not described herein again.

An embodiment of this application further provides a computer program product, where the computer program product is stored in a non- transitory storage medium. The computer program product is executed by at least one processor to implement each process of the foregoing transmission processing method embodiments, with the same technical effects achieved. To avoid repetition, details are not described herein again.

The processor is the processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or an instruction to implement each process of the foregoing transmission processing method embodiments, with the same technical effects. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. In the absence of more restrictions, an element defined by "including a ..." does not exclude another same element in a process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, a person of ordinary skill in the art may develop many other manners without departing from principles of this application and the protection scope of the claims, and all such manners fall within the protection scope of this application.

## Claims

1. A transmission processing method, comprising:
performing, by a terminal, a first operation in a case that an interval between an end position of a first resource set and a start position of a second resource set is less than an uplink-downlink switching period, wherein the first operation comprises at least one of the following:
determining that network scheduling is erroneous;
determining that network configuration is erroneous;
quitting uplink transmission or downlink operation on the first resource set, wherein the downlink operation comprises at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; wherein
the first resource set is a resource set corresponding to uplink transmission or downlink operation before an uplink-downlink switching, and the second resource set is a resource set corresponding to uplink transmission or downlink operation after the uplink-downlink switching.

2. The method according to claim 1, wherein the performing, by a terminal, a first operation comprises:
performing, by the terminal, the first operation based on at least one of the following:
configuration of a network-side device;
capability of the terminal;
type of the terminal;
processing timeline of the terminal;
configuration mode or scheduling mode for uplink transmission;
information contained in uplink transmission;
configuration mode or scheduling mode for downlink operation; and
information contained in downlink operation; wherein
the uplink transmission is uplink transmission on the first resource set and/or the second resource set; and
the downlink operation is downlink operation on the first resource set and/or the second resource set.

3. The method according to claim 1, wherein in a case that a first switching period and a second switching period cover uplink timing advance, the uplink-downlink switching period comprises at least one of the first switching period and the second switching period; or
in a case that a first switching period and a second switching period do not cover uplink timing advance, the uplink-downlink switching period comprises at least one of first determined time and second determined time, wherein the first determined time is a sum of the first switching period and the uplink timing advance, and the second determined time is a difference between the second switching period and the uplink timing advance; wherein
the first switching period is a switching period for the terminal to switch from downlink operation to uplink transmission; and
the second switching period is a switching period for the terminal to switch from uplink transmission to downlink operation.

4. The method according to claim 3, wherein X1 is determined based on at least one of subcarrier spacing for current transmission or reception, the first switching period, and the second switching period; and/or
Y1 is determined based on at least one of subcarrier spacing for current transmission or reception, the first switching period, and the second switching period.

5. A transmission processing method, comprising:
in a case that a first condition is satisfied, determining, by a terminal, that resource for uplink transmission conflicts with resource for downlink operation, wherein the terminal is a half duplex terminal in a frequency division duplex FDD system, and the downlink operation comprises at least one of downlink reception, downlink measurement, and downlink monitoring; wherein
the first condition comprises at least one of the following:
time domain resource for uplink transmission and time domain resource for downlink operation overlap at least partially;
an interval between an end position of a first resource set and a start position of a second resource set is less than a first switching period; and
the interval between the end position of the first resource set and the start position of the second resource set is less than a second switching period; wherein
the first resource set is resource used for the uplink transmission and/or the downlink operation before an uplink-downlink switching, and the second resource set is resource used for the uplink transmission and/or the downlink operation after the uplink-downlink switching;
the first switching period is a switching period for the terminal to switch from downlink operation to uplink transmission; and
the second switching period is a switching period for the terminal to switch from uplink transmission to downlink operation.

6. The method according to claim 5, after the determining, by a terminal, that resource for uplink transmission conflicts with resource for downlink operation, further comprising:
performing a second behavior in a case that no first DCI is configured for the terminal; or
performing a third behavior in a case that first DCI is configured for the terminal and the first DCI is properly detected; or
performing a fourth behavior in a case that first DCI is configured for the terminal and the first DCI is not detected; wherein
the second behavior is determined based on at least one of the following:
configuration mode or scheduling mode for uplink transmission;
configuration mode or scheduling mode for downlink operation; wherein
the uplink transmission is uplink transmission on the first resource set and/or the second resource set; and
the downlink operation is downlink operation on the first resource set and/or the second resource set;
information contained in uplink transmission; and
information contained in downlink operation;
the third behavior comprises: performing, on a first FDD frequency band, conflict processing on overlapped resource between downlink operation configured or scheduled by a network and a dynamic flexible symbol indicated by the first DCI, wherein the first FDD frequency band comprises an FDD downlink frequency band and an FDD uplink frequency band, and the overlapped resource is overlapped resource between the time domain resource for uplink transmission and the time domain resource for downlink operation; and
the fourth behavior comprises: performing processing on the first FDD frequency band based on a fifth behavior, wherein the fifth behavior is a behavior of the terminal in a case that the first DCI is not detected in a time division duplex system.

7. The method according to claim 6, after the performing, on a first FDD frequency band, conflict processing on overlapped resource between downlink operation configured or scheduled by a network and a dynamic flexible symbol indicated by the first DCI, further comprising:
performing, by the terminal, the second behavior.

8. The method according to claim 6, after the performing processing on the first FDD frequency band based on a fifth behavior, further comprising:
performing, by the terminal, the second behavior.

9. The method according to claim 6, wherein in a case that uplink transmission or downlink operation on the first resource set is configured by RRC or uplink transmission or downlink operation on the second resource set is configured by RRC, the second behavior comprises one of the following:
quitting uplink transmission or downlink operation on the second resource set;
quitting uplink transmission;
quitting receiving or transmitting last X2 symbols of the first resource set;
quitting receiving or transmitting first Y2 symbols of the second resource set; and
quitting downlink operation.

10. The method according to claim 6, wherein in a case that uplink transmission on the first resource set is dynamically scheduled or configured by RRC, or uplink transmission on the second resource set is dynamically scheduled or configured by RRC, the second behavior comprises:
quitting uplink transmission in a case that downlink operation on the first resource set or the second resource set comprises at least one of the following:
a synchronization signal/physical broadcast channel signal block SSB indicated to the terminal through a system information block SIB 1;
a control resource set configured by a main information block MIB for a TypeO PDCCH common search space; and
a valid tracking reference signal obtained based on at least one of system information, higher layer signaling, and dynamic signaling.

11. The method according to claim 6, wherein in a case that uplink transmission or downlink operation on the first resource set is dynamically scheduled, or uplink transmission or downlink operation on the second resource set is dynamically scheduled, the second behavior comprises:
determining that network scheduling or network configuration is erroneous.

12. The method according to claim 6, wherein in a case that the downlink operation is dynamically scheduled, the uplink transmission is configured by RRC, and the downlink operation and the uplink transmission correspond to different resource sets, the second behavior comprises:
in a case that an interval between a start symbol corresponding to the uplink transmission and a last symbol for scheduling signaling of the downlink operation is greater than or equal to a processing timeline of the terminal, quitting, by the terminal, the uplink transmission or performing rate matching on first Y3 symbols of the resource set corresponding to the uplink transmission; or
in a case that an interval between a start symbol corresponding to the uplink transmission and a last symbol for scheduling signaling of the downlink operation is less than a processing timeline of the terminal, quitting, by the terminal, the downlink operation or puncturing first Y3 symbols of the resource set corresponding to the uplink transmission; or
determining that network scheduling or network configuration is erroneous; and
performing rate matching on last X3 symbols of the downlink operation.

13. The method according to claim 12, wherein the uplink transmission is transmission other than physical random access channel PRACH transmission.

14. The method according to claim 6, wherein in a case that uplink transmission is dynamically scheduled, downlink operation is configured by RRC, and the downlink operation and the uplink transmission correspond to different resource sets, the second behavior comprises:
quitting the downlink operation; or
not performing the downlink operation on first Y4 symbols of the resource set corresponding to the downlink operation; or
performing rate matching on last X4 symbols of the resource set corresponding to the uplink transmission; or
determining that the dynamic scheduling is erroneous network scheduling.

15. The method according to claim 14, wherein a signal transmitted by the downlink operation is a signal other than at least one of the following:
an SSB indicated to the terminal through a SIB 1; and
a control resource set configured by a MIB for a TypeO PDCCH common search space.

16. The method according to claim 5, further comprising:
determining valid resource based on indication information, wherein the indication information comprises at least one of system information, RRC signaling, and L1 signaling; or
determining that all uplink resource and all downlink resource are valid resource; wherein
the valid resource is resource used by the terminal for uplink, downlink, and/or flexible transmission.

17. A transmission processing method, comprising:
in a case that a terminal does not have full duplex capability, regarding paired spectrum, or supplementary uplink, or flexible frequency spectrum and frequency band, determining, by the terminal, that resource satisfying a second condition among configured physical random access channel PRACH transmission resource is a valid transmission opportunity for the PRACH; wherein
the second condition comprises:
in a PRACH slot, the PRACH transmission resource being not prior to SSB transmission resource, and the PRACH transmission resource being later than the last SSB and at least N_gap symbols away from the last SSB.

18. A transmission processing method, comprising:
in a case that a terminal does not have full duplex capability, and PUSCH transmission resource of a message A does not overlap in time domain with a valid PRACH, determining, by the terminal, that resource satisfying a third condition among the PUSCH transmission resource of the message A is a valid transmission opportunity for the PUSCH of the message A; wherein
the valid PRACH is a valid PRACH associated with a 4-step random access procedure or a valid PRACH associated with a 2-step random access procedure; and
the third condition comprises:
the PUSCH transmission resource of the message A being not prior to SSB transmission resource, and the PUSCH transmission resource of the message A being later than the last SSB and at least N_gap symbols away from the last SSB.

19. A transmission processing apparatus, applied to a terminal and comprising:
a first processing module, configured to perform a first operation in a case that an interval between an end position of a first resource set and a start position of a second resource set is less than an uplink-downlink switching period, wherein the first operation comprises at least one of the following:
determining that network scheduling is erroneous;
determining that network configuration is erroneous;
quitting uplink transmission or downlink operation on the first resource set, wherein the downlink operation comprises at least one of downlink reception, downlink measurement, and downlink monitoring;
performing rate matching on last X1 symbols of the first resource set;
puncturing last X1 symbols of the first resource set;
quitting reception or quitting transmission on the second resource set;
performing rate matching on first Y1 symbols of the second resource set;
puncturing first Y2 symbols of the second resource set; and
implementing a determined first behavior based on the terminal; wherein
the first resource set is a resource set corresponding to uplink transmission or downlink operation before an uplink-downlink switching, and the second resource set is a resource set corresponding to uplink transmission or downlink operation after the uplink-downlink switching.

20. The apparatus according to claim 19, wherein the first processing module is configured to perform the first operation based on at least one of the following:
configuration of a network-side device;
capability of the terminal;
type of the terminal;
processing timeline of the terminal;
configuration mode or scheduling mode for uplink transmission;
information contained in uplink transmission;
configuration mode or scheduling mode for downlink operation; and
information contained in downlink operation; wherein
the uplink transmission is uplink transmission on the first resource set and/or the second resource set; and
the downlink operation is downlink operation on the first resource set and/or the second resource set.

21. The apparatus according to claim 19, wherein in a case that a first switching period and a second switching period cover uplink timing advance, the uplink-downlink switching period comprises at least one of the first switching period and the second switching period; or
in a case that first a switching period and a second switching period do not cover uplink timing advance, the uplink-downlink switching period comprises at least one of first determined time and second determined time, wherein the first determined time is a sum of the first switching period and the uplink timing advance, and the second determined time is a difference between the second switching period and the uplink timing advance; wherein
the first switching period is a switching period for the terminal to switch from downlink operation to uplink transmission; and
the second switching period is a switching period for the terminal to switch from uplink transmission to downlink operation.

22. The apparatus according to claim 21, wherein X1 is determined based on at least one of subcarrier spacing for current transmission or reception, the first switching period, and the second switching period; and/or
Y1 is determined based on at least one of subcarrier spacing for current transmission or reception, the first switching period, and the second switching period.

23. A transmission processing apparatus, applied to a terminal and comprising:
a first determining module, configured to determine that resource for uplink transmission conflicts with resource for downlink operation in a case that a first condition is satisfied, wherein the terminal is a half duplex terminal in a frequency division duplex FDD system, and the downlink operation comprises at least one of downlink reception, downlink measurement, and downlink monitoring; wherein
the first condition comprises at least one of the following:
time domain resource for uplink transmission and time domain resource for downlink operation overlap at least partially;
an interval between an end position of a first resource set and a start position of a second resource set is less than a first switching period; and
the interval between the end position of the first resource set and the start position of the second resource set is less than a second switching period; wherein
the first resource set is resource used for the uplink transmission and/or the downlink operation before an uplink-downlink switching, and the second resource set is resource used for the uplink transmission and/or the downlink operation after the uplink-downlink switching;
the first switching period is a switching period for the terminal to switch from downlink operation to uplink transmission; and
the second switching period is a switching period for the terminal to switch from uplink transmission to downlink operation.

24. The apparatus according to claim 23, further comprising:
a second processing module, configured to perform a second behavior in a case that no first DCI is configured for the terminal after the first determining module determines that the resource for uplink transmission conflicts with the resource for downlink operation; or
perform a third behavior in a case that first DCI is configured for the terminal and the first DCI is properly detected; or
perform a fourth behavior in a case that first DCI is configured for the terminal and the first DCI is not detected; wherein
the second behavior is determined based on at least one of the following:
configuration mode or scheduling mode for uplink transmission;
configuration mode or scheduling mode for downlink operation; wherein
the uplink transmission is uplink transmission on the first resource set and/or the second resource set; and
the downlink operation is downlink operation on the first resource set and/or the second resource set;
information contained in uplink transmission; and
information contained in downlink operation;
the third behavior comprises: performing, on a first FDD frequency band, conflict processing on overlapped resource between downlink operation configured or scheduled by a network and a dynamic flexible symbol indicated by the first DCI, wherein the first FDD frequency band comprises an FDD downlink frequency band and an FDD uplink frequency band, and the overlapped resource is overlapped resource between the time domain resource for uplink transmission and the time domain resource for downlink operation; and
the fourth behavior comprises: performing processing on the first FDD frequency band based on a fifth behavior, wherein the fifth behavior is a behavior of the terminal in a case that the first DCI is not detected in a time division duplex system.

25. The apparatus according to claim 24, wherein after the performing, on a first FDD frequency band, conflict processing on overlapped resource between downlink operation configured or scheduled by a network and a dynamic flexible symbol indicated by the first DCI, the second processing module is further configured to perform the second behavior.

26. The apparatus according to claim 24, wherein after the performing processing on the first FDD frequency band based on a fifth behavior, the second processing module is further configured to perform the second behavior.

27. The apparatus according to claim 24, wherein in a case that uplink transmission or downlink operation on the first resource set is configured by RRC or uplink transmission or downlink operation on the second resource set is configured by RRC, the second behavior comprises one of the following:
quitting uplink transmission or downlink operation on the second resource set;
quitting uplink transmission;
quitting receiving or transmitting last X2 symbols of the first resource set;
quitting receiving or transmitting first Y2 symbols of the second resource set; and
quitting downlink operation.

28. The apparatus according to claim 24, wherein in a case that uplink transmission on the first resource set is dynamically scheduled or configured by RRC, or uplink transmission on the second resource set is dynamically scheduled or configured by RRC, the second behavior comprises:
quitting uplink transmission in a case that downlink operation on the first resource set or the second resource set comprises at least one of the following:
a synchronization signal/physical broadcast channel signal block SSB indicated to the terminal through a system information block SIB 1;
a control resource set configured by a main information block MIB for a TypeO PDCCH common search space; and
a valid tracking reference signal obtained based on at least one of system information, higher layer signaling, and dynamic signaling.

29. The apparatus according to claim 24, wherein in a case that uplink transmission or downlink operation on the first resource set is dynamically scheduled, or uplink transmission or downlink operation on the second resource set is dynamically scheduled, the second behavior comprises:
determining that network scheduling or network configuration is erroneous.

30. The apparatus according to claim 24, wherein in a case that the downlink operation is dynamically scheduled, the uplink transmission is configured by RRC, and the downlink operation and the uplink transmission correspond to different resource sets, the second behavior comprises:
in a case that an interval between a start symbol corresponding to the uplink transmission and a last symbol for scheduling signaling of the downlink operation is greater than or equal to a processing timeline of the terminal, quitting, by the terminal, the uplink transmission or performing rate matching on first Y3 symbols of the resource set corresponding to the uplink transmission; or
in a case that an interval between a start symbol corresponding to the uplink transmission and a last symbol for scheduling signaling of the downlink operation is less than a processing timeline of the terminal, quitting, by the terminal, the downlink operation or puncturing first Y3 symbols of the resource set corresponding to the uplink transmission; or
determining that network scheduling or network configuration is erroneous; and
performing rate matching on last X3 symbols of the downlink operation.

31. The apparatus according to claim 30, wherein the uplink transmission is transmission other than physical random access channel PRACH transmission.

32. The apparatus according to claim 24, wherein in a case that uplink transmission is dynamically scheduled, downlink operation is configured by RRC, and the downlink operation and the uplink transmission correspond to different resource sets, the second behavior comprises:
quitting the downlink operation; or
not performing the downlink operation on first Y4 symbols of the resource set corresponding to the downlink operation; or
performing rate matching on last X4 symbols of the resource set corresponding to the uplink transmission; or
determining that the dynamic scheduling is erroneous network scheduling.

33. The apparatus according to claim 32, wherein a signal transmitted by the downlink operation is a signal other than at least one of the following:
an SSB indicated to the terminal through a SIB1; and
a control resource set configured by a MIB for a TypeO PDCCH common search space.

34. The apparatus according to claim 23, further comprising:
an indication module, configured to determine valid resource based on indication information, wherein the indication information comprises at least one of system information, RRC signaling, and L1 signaling; or
determine that all uplink resource and all downlink resource are valid resource; wherein
the valid resource is resource used by the terminal for uplink, downlink, and/or flexible transmission.

35. A transmission processing apparatus, applied to a terminal and comprising:
a second determining module, configured to: in a case that a terminal does not have full duplex capability, regarding paired spectrum, or supplementary uplink, or flexible frequency spectrum and frequency band, determine, by the terminal, that resource satisfying a second condition among configured physical random access channel PRACH transmission resource is a valid transmission opportunity for the PRACH; wherein
the second condition comprises:
in a PRACH slot, the PRACH transmission resource being not prior to SSB transmission resource, and the PRACH transmission resource being later than the last SSB and at least N_gap symbols away from the last SSB.

36. A transmission processing apparatus, applied to a terminal and comprising:
a third determining module, configured to: in a case that the terminal does not have full duplex capability, and PUSCH transmission resource of a message A does not overlap in time domain with a valid PRACH, determine, by the terminal, that resource satisfying a third condition among the PUSCH transmission resource of the message A is a valid transmission opportunity for the PUSCH of the message A; wherein
the valid PRACH is a valid PRACH associated with a 4-step random access procedure or a valid PRACH associated with a 2-step random access procedure; and
the third condition comprises:
the PUSCH transmission resource of the message A being not prior to SSB transmission resource, and the PUSCH transmission resource of the message A being later than the last SSB and at least N_gap symbols away from the last SSB.

37. A terminal, comprising a processor, a memory, and a program or instructions stored in the memory and capable of running on the processor, wherein when the program or instructions are executed by the processor, the steps of the transmission processing method according to any one of claims 1 to 4 are implemented, or the steps of the transmission processing method according to any one of claims 5 to 16 are implemented, or the steps of the transmission processing method according to claim 17 are implemented, or the steps of the transmission processing method according to claim 18 are implemented.

38. A readable storage medium, wherein the readable storage medium stores a program or instructions, and when the program or instructions are executed by a processor, the steps of the transmission processing method according to any one of claims 1 to 4 are implemented, or the steps of the transmission processing method according to any one of claims 5 to 16 are implemented, or the steps of the transmission processing method according to claim 17 are implemented, or the steps of the transmission processing method according to claim 18 are implemented.

39. A chip, comprising a processor and a communication interface, wherein the communication interface is coupled to the processor, and the processor is configured to run a program or instructions to implement the steps of the transmission processing method according to any one of claims 1 to 4, or the steps of the transmission processing method according to any one of claims 5 to 16, or the steps of the transmission processing method according to claim 17, or the steps of the transmission processing method according to claim 18.

40. A computer program product, wherein the computer program product is stored in a non-transitory readable storage medium, and the computer program product is executed by at least one processor to implement the steps of the transmission processing method according to any one of claims 1 to 4, or the computer program product is executed by at least one processor to implement the steps of the transmission processing method according to any one of claims 5 to 16, or the computer program product is executed by at least one processor to implement the steps of the transmission processing method according to claim 17, or the computer program product is executed by at least one processor to implement the steps of the transmission processing method according to claim 18.

41. A communication device, configured to perform the steps of the transmission processing method according to any one of claims 1 to 4, or configured to perform the steps of the transmission processing method according to any one of claims 5 to 16, or configured to perform the steps of the transmission processing method according to claim 17, or configured to perform the steps of the transmission processing method according to claim 18.
